(19) Europäisches Patentamt
European Patent Office
Office européen des brevets

(11) **EP 2 966 791 A1**

(12) **EUROPEAN PATENT APPLICATION**
published in accordance with Art. 153(4) EPC

(43) Date of publication:
**13.01.2016 Bulletin 2016/02**

(51) Int Cl.:
**H04B 10/275** (2013.01)   **H04J 14/02** (2006.01)

(21) Application number: **14759978.1**

(86) International application number:
**PCT/KR2014/001885**

(22) Date of filing: **07.03.2014**

(87) International publication number:
**WO 2014/137183 (12.09.2014 Gazette 2014/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.03.2013 KR 20130025178**
**26.02.2014 KR 20140022633**

(71) Applicant: **Ericsson-LG Co., Ltd.**
**Seoul 135-985 (KR)**

(72) Inventors:
- **RHY, Hee Yeal**
  **Ansan-si**
  **Gyeonggi-do 426-752 (KR)**
- **YI, Gwang Yong**
  **Seoul 120-783 (KR)**

(74) Representative: **Frenkel, Matthias Alexander**
**Wuesthoff & Wuesthoff**
**Patentanwälte PartG mbB**
**Schweigerstrasse 2**
**81541 München (DE)**

(54) **SIGNAL PROCESSING METHOD AND BIDIRECTIONAL CWDM RING NETWORK SYSTEM FOR SAME**

(57) The present disclosure relates to a signal processing method and a bidirectional coarse wavelength division multiplexing (CWDM) ring network system allocating at least two wavelength channels per a single wavelength grid to thereby increase the numbers of wavelength channels. The bidirectional CWDM ring network system is configured to form an optical signal having specific wavelength; allocate at least two wavelength channels per a single CWDM wavelength grid; and add an optical signal having specific wavelength to the optical signal formed in at least two the optical transceivers or drop an optical signal having specific wavelength to the optical signal formed at the at least two optical transceivers.

FIG. 7

## Description

TECHNICAL FIELD

The present disclosure relates to the field of Coarse Wavelength Division Multiplexing (CWDM) ring network system, and more particularly, to a signal processing method and a bidirectional CWDM ring network system that allocates at least two wavelength channels per a CWDM wavelength grid and thereby increasing the channel capacity.

BACKGROUND

A Wavelength Division Multiplexing Passive Optical Network (WDM-PON) is a telecommunication method of combining optical signals having different wavelengths and transmitting them via an optical cable. The WDM-PON allocates unique individual wavelength channels to each subscriber and thereby provides the subscribers with point-to-point dedicated channels. The WDM-PON can provide high speed telecommunication since the WDM-PON performs telecommunication by using the different optical signals to the respective subscribers.

The WDM-PON transmits/receives the optical signals having different wavelengths, which are outputted from a plurality of light sources, by using a multiplexer via the optical cable. If the WDM method is used, it is possible to transmit a large amount of data at the same time and thereby increase transmission bandwidth; and it is possible to transmit the data by using a single optical cable and thereby save rental and maintenance costs of the optical cable.

The WDM-PON has a structure that connects an optical line terminal (OLT) located in a central office with an optical network unit (ONU) located at a subscriber's side, by using the single optical cable.

The WDM-PON optical telecommunication system requires not only a tree-shaped structure in which signals transmitted from the OLT are split into the optical signals having a number of wavelengths via a multiplexer/demultiplexer included in a relay node (RN) and the split optical signals are transmitted to the respective ONU; but also a ring-shaped structure in which an optical signal having specific wavelength can be added or dropped at least two nodes.

Meanwhile, the WDM is classified as a dense wavelength division multiplexing (DWDM) and a coarse wavelength division multiplexing (CWDM) according to intervals between the wavelengths which are to be multiplexed.

In the DWDM method, the intervals between the wavelengths of the optical signals are minutely set to, e.g. 0.8 *nm*, 0.4 *nm* or the like, and a usable bandwidth is a C-band having a bandwidth of 1525-1565 *nm* or a L-band having a bandwidth of 1570-1610 *nm*. In the DWDM method, a distributed feedback (DFB) laser is used as the light source; and the DFB laser has wavelength transition of about 0.8nm/°C according to a temperature change. Thus, in the DWDM, the DFB laser having a cooling function is used to prevent wavelength transition of the optical signals outside a passband of the multiplexer/demultiplexer according to the temperature change.

Meanwhile, in the CWDM method, the intervals between the wavelengths of the optical signals are broadly set to, e.g. 20 *nm*. The CWDM method uses up to 18 channels in a wavelength band of the single mode fiber, i.e., a wavelength band from 1271 *nm* to 1611 *nm*. In the CWDM method, the DFB laser does not have a cooling function, unlike the DWDM method. Since an optical network system is generally operated within 0°C to 70°C range, the wavelength transition of the DFB laser according to the temperature change can be about 6 *nm*. A total of the wavelength transition of the DFB laser may be up to 12 nm considering that the wavelength transition of the DFB laser according to the temperature change is added to the wavelength transition which may be caused by a manufacturing process, i.e., e.g. $\pm 3$ *nm*. In the CWDM method, since a passband of an optical filter and a channel spacing need to be sufficiently broad to accommodate the wavelength transition of the DFB laser, there is a problem that it is always needed to allocate a single wavelength channel per a single CWDM wavelength grid to thereby transmit or receive a single optical signal.

SUMMARY

There are provided a signal processing method and a bidirectional coarse wavelength division multiplexing (CWDM) ring network system that allocates at least two wavelength channels per a CWDM wavelength grid and thereby increases the channel capacity.

In one embodiment, the bidirectional CWDM ring network system includes: at least two optical transceivers including a light source configured to form an optical signal having specific wavelength and an element configured to allocate at least two wavelength channels per a single CWDM wavelength grid; and at least two optical add-drop multiplexers (OADMs) connected to the at least two optical transceivers and configured to add an optical signal having specific wavelength to the optical signal formed at the at least two optical transceivers or drop an optical signal having specific wavelength from the optical signal formed at the at least two optical transceivers.

In another embodiment, the signal processing method applied to the bidirectional CWDM ring network system includes: forming an optical signal having specific wavelength; allocating at least two wavelength channels per a CWDM wavelength grid; and adding an optical signal having specific wavelength to the optical signal formed at at least two optical transceivers or dropping an optical signal having specific wavelength from the optical signal formed at the at least two optical transceivers.

BRIEF DESCRIPTION OF THE DRAWINGS

FIG. 1 is an exemplary view illustrating a unidirectional CWDM ring optical network according to an embodiment of the present disclosure.

FIG. 2 is an exemplary view illustrating a bidirectional CWDM ring optical network according to an embodiment of the present disclosure.

FIG. 3 is an exemplary view illustrating an optical spectrum of the CWDM optical signal according to an embodiment of the present disclosure.

FIG. 4 is an exemplary view illustrating an optical add and drop multiplexer (OADM) for the unidirectional CWDM ring optical network according to an embodiment of the present disclosure.

FIG. 5 is an exemplary view illustrating an OADM for the bidirectional CWDM ring optical network according to an embodiment of the present disclosure.

FIG. 6 is an exemplary view illustrating an apparatus that allocates multiple wavelength channels per a CWDM wavelength grid according to an embodiment of the present disclosure.

FIG. 7 is an exemplary view illustrating the bidirectional CWDM ring optical network formed by allocating two wavelength channels per CWDM wavelength grid according to an embodiment of the present disclosure.

FIG. 8 is an exemplary view illustrating the optical spectrum of the CWDM optical signal that allocates two wavelength channels per CWDM wavelength grid according to an embodiment of the present disclosure.

FIG. 9 is an exemplary view illustrating an optical filter included in the OADM according to an embodiment of the present disclosure.

FIG. 10 is an exemplary view illustrating a bidirectional CWDM dual home network according to an embodiment of the present disclosure.

FIG. 11 is an exemplary view illustrating a bidirectional CWDM ring optical network according to an embodiment of the present disclosure.

FIG. 12 is an exemplary view illustrating an optical spectrum of the CWDM optical signal that allocates four wavelength channels per CWDM wavelength grid according to an embodiment of the present disclosure.

FIG. 13 is an exemplary view illustrating the bidirectional CWDM ring optical network according to an embodiment of the present disclosure.

FIG. 14 is an exemplary view illustrating the optical filter included in the OADM according to an embodiment of the present disclosure.

FIGS. 15 and 16 are exemplary views illustrating the bidirectional CWDM ring optical networks according to embodiments of the present disclosure.

FIG. 17 is an exemplary flow chart illustrating a method allocating at least two wavelength channels per CWDM wavelength grid according to an embodiment of the present disclosure.

DETAILED DESCRIPTION

Hereinafter, embodiments of the present disclosure will be described in detail with reference to the attached drawings. However, in the following description, well-known functions or constitutions will not be described in detail if they would obscure the invention in unnecessary detail.

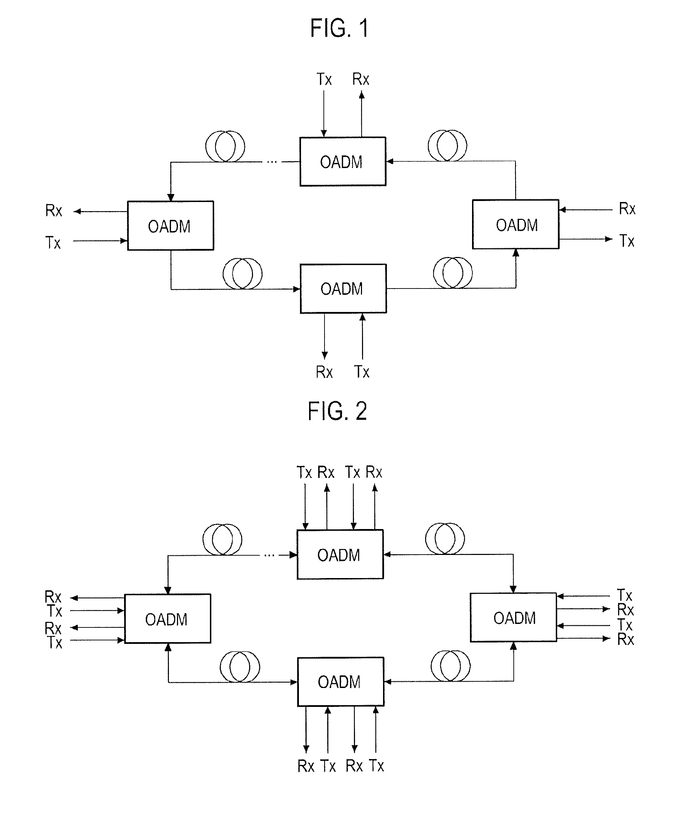

A coarse wavelength division multiplexing (CWDM) ring optical network for a metro network includes: a unidirectional CWDM ring optical network capable of transmitting /receiving optical signals to only one direction by using a single optical cable; and a bidirectional CWDM ring optical network capable of transmitting/receiving optical signals to both direction by using the single optical cable. FIG. 1 is an exemplary view illustrating the unidirectional CWDM ring optical network according to an embodiment of the present disclosure; and FIG. 2 is an exemplary view illustrating the bidirectional CWDM ring optical network according to an embodiment of the present disclosure. The unidirectional or bidirectional CWDM ring optical network may include an optical add-drop multiplexer (OADM) for adding an optical signal having specific wavelength to the optical signal transmitted via a single optical cable or dropping an optical signal having specific wavelength from the optical signal transmitted via the single optical cable.

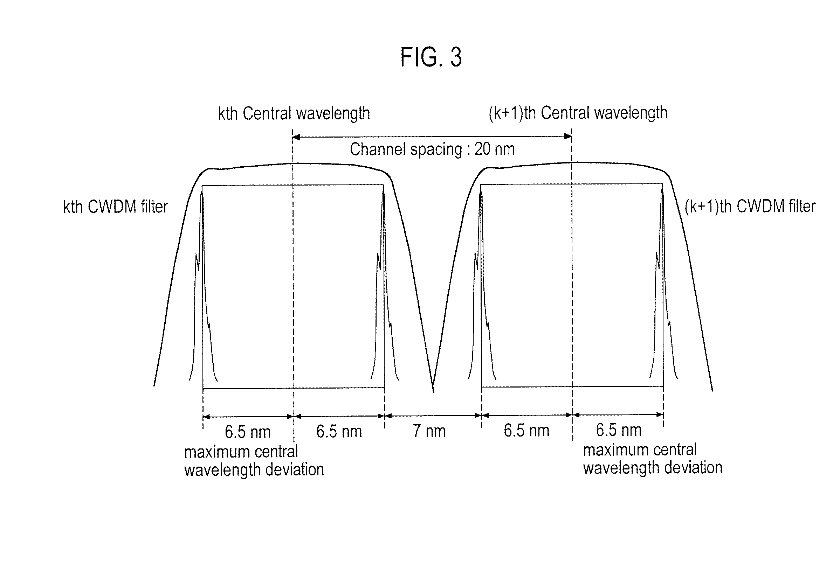

FIG. 3 is an exemplary view illustrating an optical spectrum of the CWDM optical signal according to an embodiment of the present disclosure.

Referring to FIG. 3, when a channel spacing between wavelength channels of the CWDM is defined as 20 *nm,* a central wavelength deviation of each wavelength channel may be defined as $\pm$ 6.5 *nm*. Since a dense wavelength division multiplexing (DWDM) optical network system includes: a single wavelength light source using a thermo-electric cooler (TEC) and a wavelength marker (WM); and a narrow linewidth optical filter, the DWDM optical network system is costly. Whereas, since a CWDM optical network system includes: a single wavelength light source that does not use the TEC and the WM; and a wide linewidth optical filter, the CWDM optical network system can be built at a low cost. In the CWDM, the central wavelength deviation was standardized to $\pm$ 6.5 *nm* by considering the single wavelength light source that does not use the TEC, and the channel spacing was standardized to 20 *nm* by considering a linewidth of the optical filter.

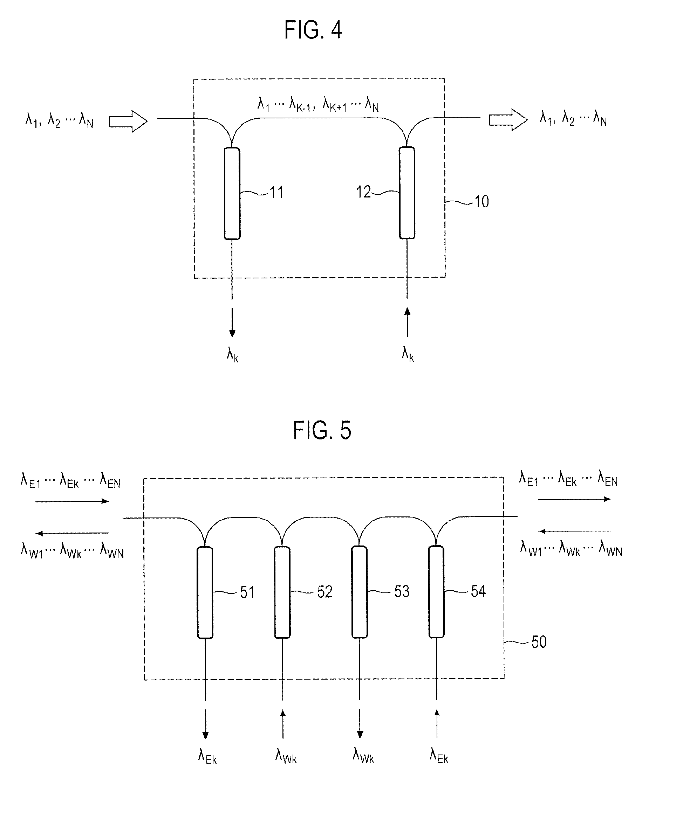

FIG. 4 is an exemplary view illustrating the OADM for the unidirectional CWDM ring optical network according to an embodiment of the present disclosure.

Referring to FIG. 4, the OADM 10 for the unidirectional CWDM ring optical network may include two optical filters 11 and 12 for penetrating or reflecting an optical signal having the $k^{th}$ wavelength $\lambda_k$ among N wavelengths $\lambda_1 ... \lambda_N$, wherein the N is a natural number, and reflecting or penetrating the other optical signals having the other wavelengths $\lambda_1 ... \lambda_{k-1}, \lambda_{k+1} ... \lambda_N$, wherein each of the optical filters 11 and 12 may include add and drop ports for penetrating or reflecting the optical signal having the $k^{th}$ wavelength $\lambda_k$.

**FIG. 5** is an exemplary view illustrating the OADM for the bidirectional CWDM ring network according to an embodiment.

Referring to **FIG. 5,** the OADM 50 for the bidirectional CWDM ring optical network may include: two optical filters 51 and 54 for transmitting/receiving one directional (e.g., East) of the two directions optical signals; and two optical filters 52 and 53 for transmitting/receiving the other directional (e.g., West) optical signals. Wherein each of the optical filters 51, 52, 53, and 54 may include add and drop ports for penetrating or reflecting the optical signal having the $k^{th}$ wavelength $\lambda_{Ek}$ among the one directional (e.g., East) N wavelengths $\lambda_{E1} ... \lambda_{EN}$ (wherein the N is natural number) and for reflecting or penetrating the other optical signals having the other wavelengths $\lambda_{E1} ... \lambda_{Ek-1}, \lambda_{Ek+1} ... \lambda_{EN}$, or for penetrating or reflecting the optical signal having the $k^{th}$ wavelength $\lambda_{Wk}$ among the other directional (e.g., West) N wavelengths $\lambda_{W1} ... \lambda_{WN}$ (wherein the N is natural number) and reflecting or penetrating the other optical signals having the other wavelengths $\lambda_{W1} ... \lambda_{Wk-1}, \lambda_{Wk+1} ... \lambda_{WN}$.

In the CWDM ring network standardized by the International Telecommunication Union Telecommunication Standardization Sector (ITU-T) G.695, only a single wavelength channel for transmitting or receiving of the optical signals is allocated at each CWDM wavelength grid having 20 nm channel spacing. Since up to 18 wavelength channels having 20 nm intervals are used in a wavelength band (i.e., from 1271 nm to 1611 nm) of the single mode fiber, the channel capacity is limited. In the unidirectional CWDM ring network, each OADM may include at least two optical filters for transmitting/receiving the optical signals; whereas in the bidirectional CWDM ring network, each OADM may include at least four optical filters for transmitting/receiving the optical signals. Thus, an insertion loss of the OADM used in the bidirectional CWDM ring network may become larger than that of the unidirectional CWDM ring network.

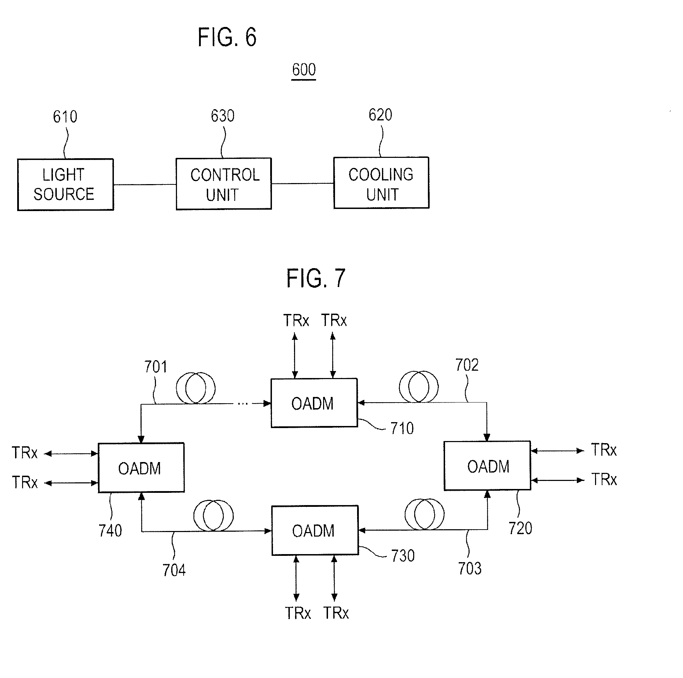

**FIG. 6** is an exemplary view illustrating an apparatus allocating multiple wavelength channels per CWDM wavelength grid according to an embodiment of the present disclosure.

Referring to **FIG. 6,** the apparatus 600 that allocates multiple wavelength channels per CWDM wavelength grid may include a light source 610, a cooling unit 620 and a control unit 630.

The light source 610 may form the optical signal having specific wavelength by applying forward voltage to a PN junction of P-type and N-type semiconductors. In one embodiment, the light source 610 may include the DFB laser, but not limited thereto, and may be any device that is capable of forming the optical signal having a single wavelength.

The cooling unit 620 may detect the temperature of the light source 610 and form a current corresponding to the detected temperature to thereby decrease the temperature of the light source 610. In one embodiment, the cooling unit 620 may include the TEC capable of detecting the temperature of the light source 610 and forming a current corresponding to the detected temperature to thereby decrease the temperature of the light source 610.

The control unit 630 may decrease a wavelength deviation of the optical signal formed at the light source 610 by decreasing the temperature of the light source 610 and thereby control the allocation of at least two channels per CWDM wavelength grid. The control unit 630 may allocate one channel as a transmitting channel of an identical subscriber and the other channel as a receiving channel of the identical subscriber. In one embodiment, the control unit 630 may set the wavelength deviation of the allocated at least two channels at 2.5 *nm* or less. Further, the control unit 630 may set a guardband between the allocated at least two channels. In one embodiment, the bandwidth of the guardband may be 3 *nm.*

In this context, the at least two channels may include even-number channels, that is to say 2, 4, 6, ..., 2N (wherein N is a natural number) channels.

If the even-number channels are set to be two channels, the control unit 630 may allocate one channel of the two channels for a transmitting channel of a subscriber A, and the other channel of the two channels for a receiving channel of the subscriber A.

Further, if the even-number channels are set to be four or more channels, the control unit 630 may allocate a half of the channels for transmitting channels of separated subscribers and the other half of the channels for receiving channels of the separated subscribers. In one embodiment, if the even-number channels are set to be six channels, the control unit 630 may allocate three channels for the transmitting channels of subscribers A, B and C, respectively, and the other three channels for the receiving channels of the subscribers A, B and C, respectively.

**FIG. 7** is an exemplary view illustrating the bidirectional CWDM ring optical network formed by allocating two wavelength channels per single CWDM wavelength grid according to an embodiment of the present disclosure.

Referring to **FIG. 7,** the bidirectional CWDM ring optical network may include: the OADMs 610, 620, 630, and 640 for penetrating or reflecting the optical signals having specific wavelengths: and optical transceivers (TRx) connected with the OADMs 610, 620, 630, and 640 to thereby transmit/receive the optical signals. The bidirectional CWDM ring optical network may forward the optical signals having separated wavelengths ($\lambda_{E1} ... \lambda_{EN}$ ; $\lambda_{W1} ... \lambda_{WN}$) from one of the OADMs 610, 620, 630, and 640 to another OADMs 610, 620, 630, and 640 via the optical cables 601, 602, 603, and 604. The TRx may include the apparatus allocating multiple wavelength channels capable of allocating at least two wavelength channels per CWDM wavelength grid.

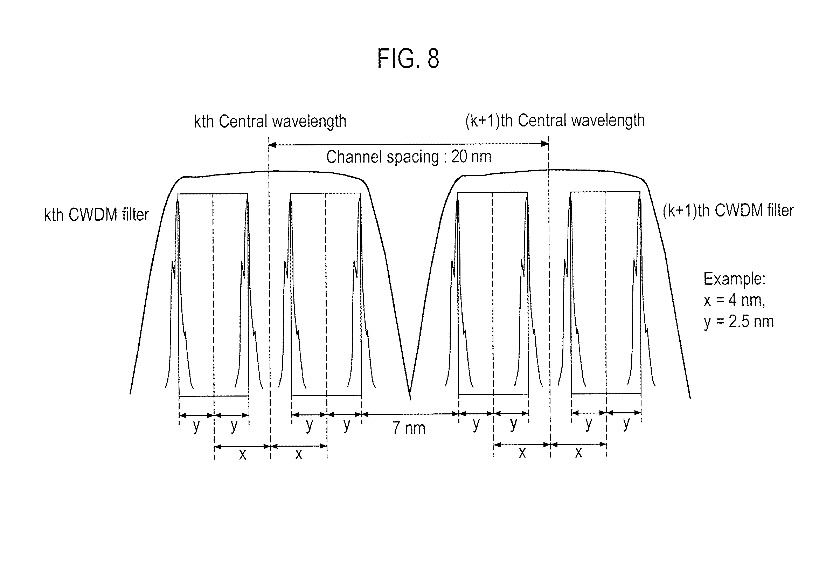

**FIG. 8** is an exemplary view illustrating an optical spectrum of the CWDM optical signal that allocates two wavelength channels per CWDM wavelength grid according to an embodiment of the present disclosure.

Referring to **FIG. 8,** the bidirectional CWDM ring optical network may include an apparatus capable of allocating at least two channels per CWDM wavelength grid to thereby allocate two channels for the transmitting wavelength channel and the receiving wavelength channel of the identical subscriber per CWDM wavelength grid.

In one embodiment, an optical package including an apparatus that allocates multiple channels may be built at a low cost. By using such optical package, it is possible to set the central wavelength deviation (y) of the TRx may be set at 2.5 *nm* or less according to the ambient temperature change. If the two sub-channels are set to be 4 *nm* away from the CWDM central wavelength having 20 *nm* intervals, a guardband having 3 *nm* bandwidth may be set between the two sub-channels. The bandwidth of the guardband may be calculated by using the following equation (1)

$$\lambda = 2 * (\mathrm{x} * \mathrm{y}) \qquad (1)$$

Wherein the $\lambda$ represents the bandwidth of the guardband, the x represents the wavelength separation distance of the two sub-channels, and the y represents the central wavelength deviation of the two sub-channels.

If a wavelength separation distance (x) of the sub-channel and the central wavelength deviation (y) of the sub-channel are set by using the equation (1), a bidirectional two channel CWDM optical transceiver, which has a low cost type TEC-embedded optical package and does not have the WM, may be built at a low cost.

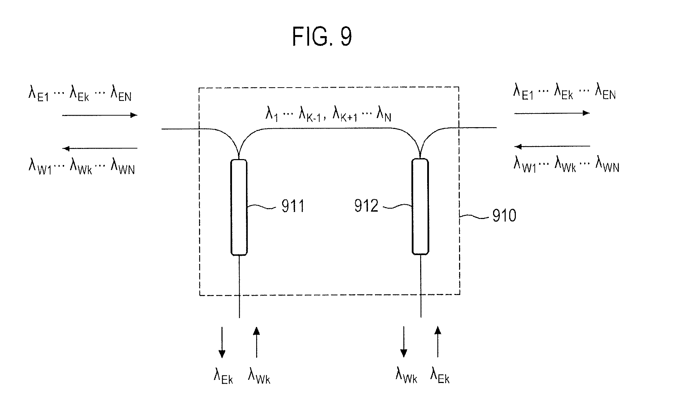

**FIG. 9** is an exemplary view illustrating the optical filter included in the OADM according to an embodiment of the present disclosure.

Referring to **FIG. 9,** the optical filter of the OADM may have the same structure as an OADM optical filter of a conventional unidirectional CWDM ring optical network. However, in one embodiment, a pair of the TRx for transmitting/receiving of the optical signal having a specific wavelength may be connected to a single port included in each of the optical filters 911 and 912.

Since the OADM of the present disclosure may be built with only two optical filters whereas the OADM of the conventional bidirectional CWDM ring optical network should use four optical filters, it is possible to form a network that an insertion loss caused by the optical filters is low at a low cost.

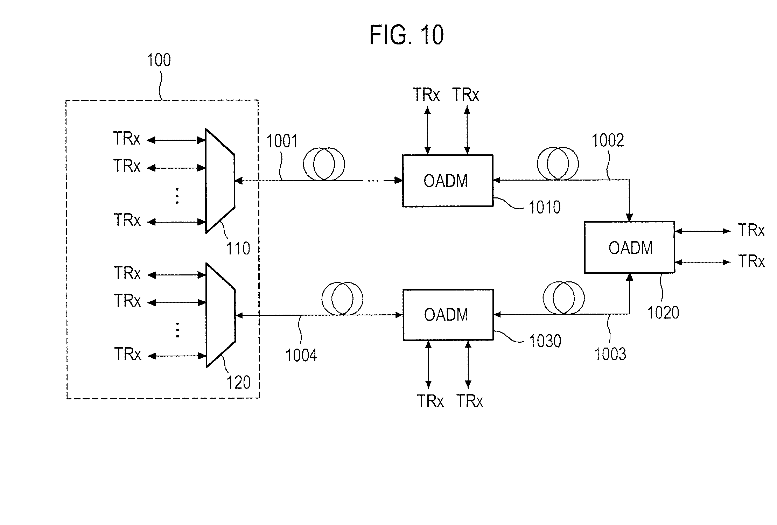

**FIG. 10** is an exemplary view illustrating a bidirectional CWDM dual home network according to an embodiment of the present disclosure.

In one embodiment, the bidirectional CWDM dual home network may be formed by further connecting CWDM wavelength division multiplexers 110 and 120 to OADMs 1010, 1020, and 1030 of the bidirectional CWDM ring optical network. In case that multiple apparatuses included in the central office 100 are connected to remote apparatuses (not shown) located at separated remote locations via the OADMs 1010, 1020, and 1030, the first TRx is connected to the first wavelength division multiplexer 110 and the second TRx for protection switching is connected to the second wavelength division multiplexer 120 and thus when the first wavelength division multiplexer 110 is not working, it becomes possible to perform communication by using the second wavelength division multiplexer 120.

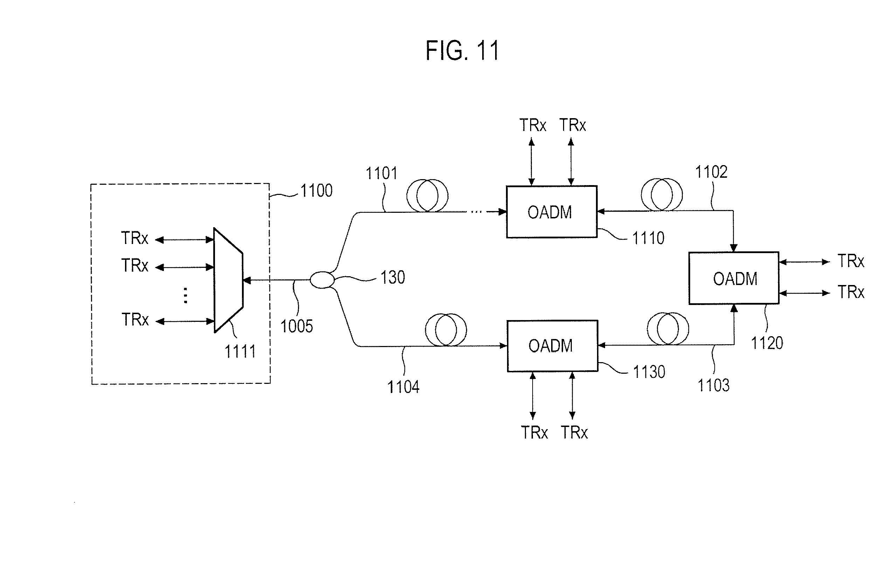

**FIG. 11** is an exemplary view illustrating the bidirectional CWDM ring optical network according to an embodiment of the present disclosure.

While the bidirectional CWDM dual home network illustrated in **FIG. 10** is formed by connecting the two CWDM wavelength division multiplexers 110, 120 to the OADMs 1010, 1020, and 1030, the bidirectional CWDM ring optical network illustrated in **FIG. 11** may be formed by connecting a single CWDM wavelength division multiplexer 1111 and an optical power distributer 130 to the OADMs 1110, 1120, and 1130. The numbers of the TRx included in a central office 1100 illustrated in **FIG. 11** may be decreased by half of the numbers of the TRx included in the central office illustrated in **FIG. 10,** and the identical optical signal may be distributed and transmitted bilaterally by the optical power distributer 130.

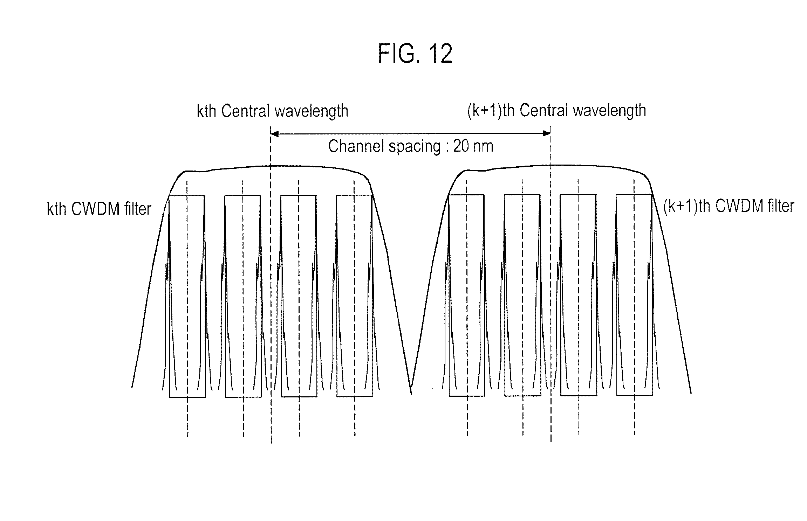

**FIG. 12** is an exemplary view illustrating the optical spectrum of the CWDM optical signal that allocates four wavelength channels per CWDM wavelength grid according to an embodiment of the present disclosure.

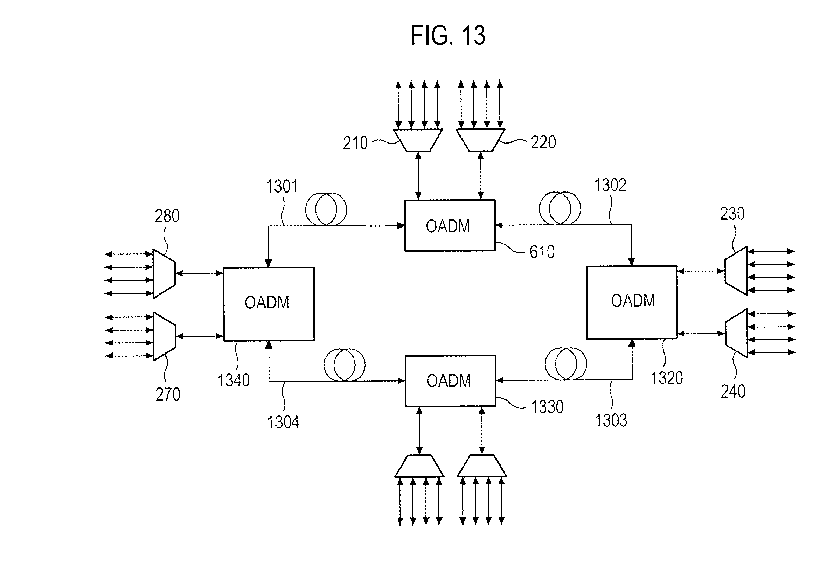

Referring to **FIG. 12,** more than two channels may be allocated per single CWDM wavelength grid. In case that more than two channels per single CWDM wavelength grid are allocated, the OADM of the bidirectional CWDM ring optical network illustrated in **FIG. 13** may be connected to wavelength division multiplexer/demultiplexers 210, 220, 230, 240, 250, 260, 270, and 280 to thereby divide and combine the channel wavelengths allocated at the single CWDM wavelength grid and the OADM of the bidirectional CWDM ring optical network may be connected to an optical TRx (not shown).

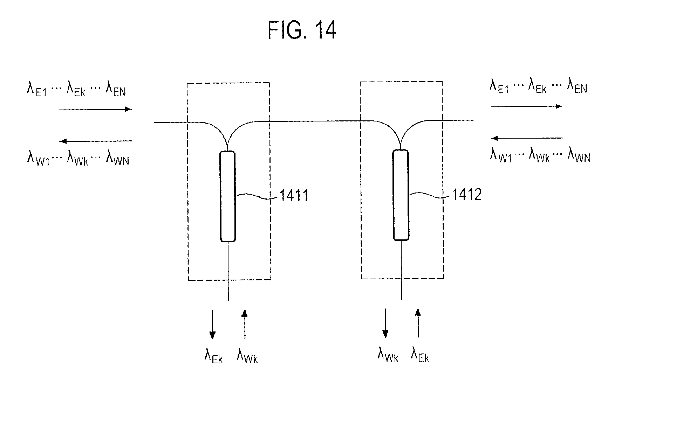

**FIG. 14** is an exemplary view illustrating the optical filter included in the OADM according to an embodiment of the present disclosure.

Referring to **FIG. 14,** the bidirectional CWDM ring optical network may be formed by including an optical filter 1411 or 1412 per OADM.

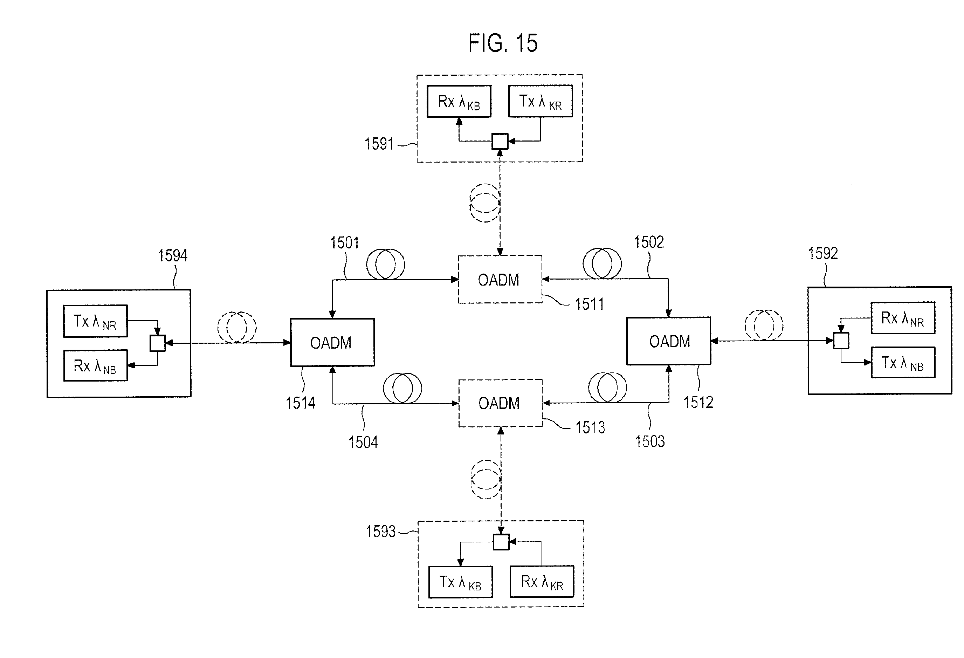

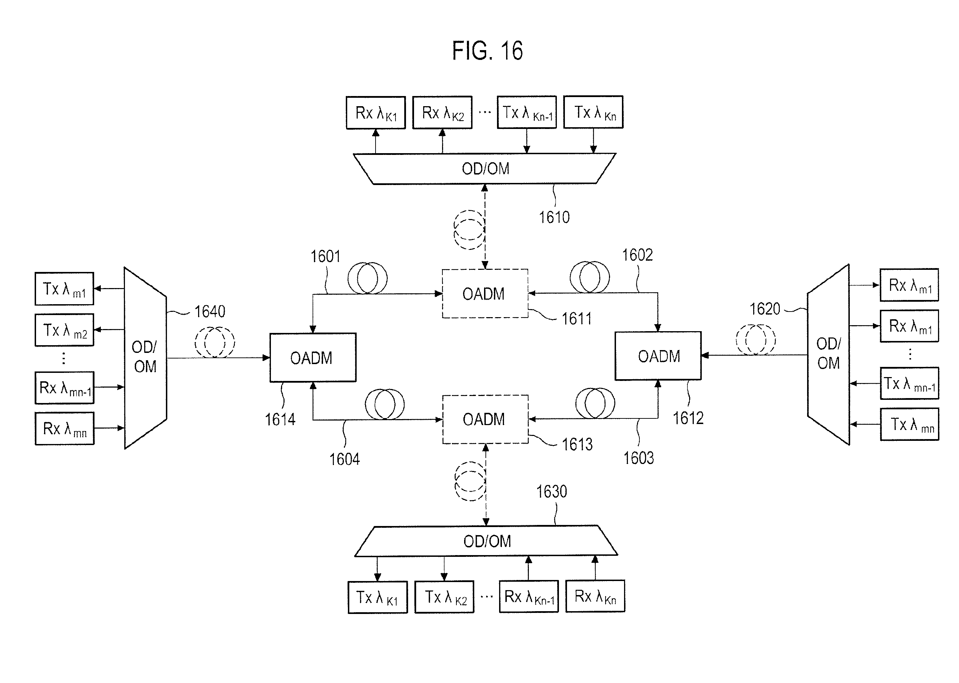

**FIGS. 15** and **16** are exemplary views illustrating the bidirectional CWDM ring optical networks according to embodiments of the present disclosure.

The bidirectional CWDM ring optical network illustrated in **FIG. 15** may be formed by modifying the bidirectional CWDM ring optical network illustrated in **FIG. 7.** The bidirectional CWDM ring optical network illustrated in **FIG. 15** may be formed by connecting the OADMs 1511, 1512, 1513, and 1514 having a single optical filter via the optical cables 1501, 1502, 1503, and 1504, and by connecting each of the OADM 1511, 1512, 1513, and 1514 to each of the TRx 1591, 1592, 1593, and 1594.

Further, the bidirectional CWDM ring optical network illustrated in **FIG. 16** may be formed by applying the OADMs 1610, 1620, 1630, and 1640 having a single optical filter to the bidirectional CWDM ring optical network illustrated in **FIG. 13.**

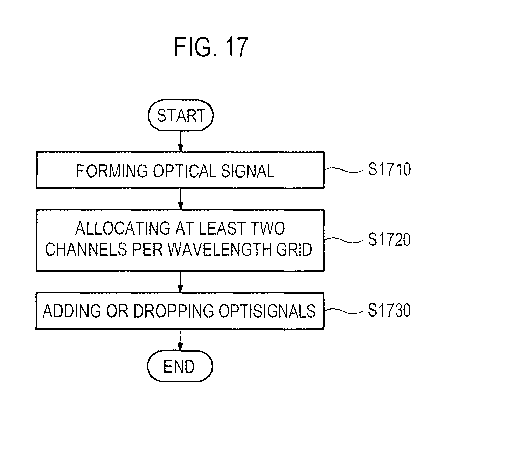

**FIG. 17** is an exemplary flow chart illustrating a method allocating at least two wavelength channels per single CWDM wavelength grid according to an embodiment of the present disclosure.

Referring to **FIG. 17,** the apparatus 600 forms the optical signal having a specific wavelength, in the step S1710. The apparatus 600 may decrease the wavelength deviation of the formed optical signal and thus allocate at least two wavelength channels per CWDM wavelength grid, in the step S1720. Further, the OADM may add or drop optical signals formed by the at least two optical transceivers, in the step S1730.

According to the present disclosure, it is possible to increase the numbers of the wavelength channel of the CWDM by allocating at least two wavelength channels per CWDM wavelength grid, twice or more compared to the conventional CWDM system. Further, the number of the optical filters included in the OADM for bidirectional optical communication may be decreased.

While the foregoing methods have been described with respect to particular embodiments, these methods may also be implemented as computer-readable codes on a computer-readable recording medium. The computer-readable recoding medium includes any kind of data storage devices that can be read by a computer system. Examples of the computer-readable recording medium include ROM, RAM, CD-ROM, magnetic tape, floppy disk, optical data storage device and the like, and also include that implemented in the form of a carrier wave (e.g., transmission via Internet). Also, the computer-readable recoding medium can be distributed to the computer systems which are connected through a network so that the computer-readable codes can be used and executed thereon. Further, the functional programs, codes, and code segments for implementing the foregoing embodiments can easily be inferred by the programmers in the art to which the present disclosure pertains.

Although embodiments have been described with reference to a number of illustrative embodiments thereof, it should be understood that numerous other modifications and embodiments can be devised by those skilled in the art that will fall within the spirit and scope of the principles of this disclosure. Furthermore, numerous variations and modifications are possible in the component parts and/or arrangements of the subject combination arrangement within the scope of the appended claims.

**Claims**

1. A bidirectional coarse wavelength division multiplexing (CWDM) ring network system comprising:

   at least two optical transceivers including a light source configured to form an optical signal having a specific wavelength and an element configured to allocate at least two wavelength channels per a single CWDM wavelength grid; and at least two optical add-drop multiplexers (OADMs) connected to the at least two optical transceivers and configured to add an optical signal having a specific wavelength to the optical signal formed at the at least two optical transceivers or drop an optical signal having a specific wavelength from the optical signal formed at the at least two optical transceivers.

2. The bidirectional CWDM ring network system of Claim 1, wherein the element includes a Thermo-Electric Cooler (TEC).

3. The bidirectional CWDM ring network system of Claim 1, wherein the element is configured to decrease a wavelength deviation of the optical signal.

4. The bidirectional CWDM ring network system of Claim 3, wherein the element is configured to set the wavelength deviation of the optical signal at 2.5 *nm* or less.

5. The bidirectional CWDM ring network system of Claim 1, wherein the at least two channels includes even-number channels.

6. The bidirectional CWDM ring network system of Claim 5, wherein the even-number channels include two channels, and wherein the element allocates one channel of the two channels for a transmitting channel of a subscriber, and the other channel of the two channels for a receiving channel of the subscriber.

7. The bidirectional CWDM ring network system of Claim 5, wherein the even-number channels include four or more channels, and wherein the element allocates a half of the channels for transmitting channels of separated subscribers and the other half of the channels for receiving channels of the separated subscribers.

8. The bidirectional CWDM ring network system of Claim 1, wherein the element is configured to set a guardband between the at least two channels.

9. A bidirectional coarse wavelength division multiplexing (CWDM) ring network system comprising:

at least two optical transceivers including a light source configured to form an optical signal having a specific wavelength and an element configured to allocate at least two wavelength channels per a CWDM wavelength grid; and
at least two optical add-drop multiplexers (OADMs) connected to the at least two optical transceivers and configured to add an optical signal having a specific wavelength to the optical signal formed at the at least two optical transceivers or drop an optical signal having a specific wavelength from the optical signal formed at the at least two optical transceivers,
wherein at least one OADM of the at the least two OADMs includes a wavelength division multiplexer.

10. A signal processing method applied to a bidirectional coarse wavelength division multiplexing (CWDM) ring network system, comprising:

a) forming an optical signal having a specific wavelength;
b) allocating at least two wavelength channels per a CWDM wavelength grid; and
c) adding an optical signal having a specific wavelength to the optical signal formed in at least two optical transceivers or dropping an optical signal having a specific wavelength from the optical signal formed at the at least two optical transceivers.

11. The signal processing method of Claim 10, wherein the step b) may be performed by a Thermo-Electric Cooler (TEC).

12. The signal processing method of Claim 10, wherein the step b) includes decreasing a wavelength deviation of the optical signal.

13. The signal processing method of Claim 12, wherein the step b) includes decreasing the wavelength deviation of the optical signal at 2.5 *nm* or less.

14. The signal processing method of Claim 10, wherein the at least two channels includes even-number channels.

15. The signal processing method of Claim 14, wherein the even-number channels include two channels, and wherein the element allocates one channel of the two channels for a transmitting channel of a subscriber, and the other channel of the two channels for a receiving channel of the subscriber.

16. The signal processing method of Claim 14, wherein the even-number channels include four or more channels, and wherein the element allocates a half of the channels for transmitting channels of separated subscribers and the other half of the channels for receiving channels of the separated subscribers.

17. The signal processing method of Claim 10, wherein the step b) includes setting a guardband between the at least two channels.

FIG. 1

FIG. 2

# FIG. 3

kth Central wavelength          (k+1)th Central wavelength

Channel spacing : 20 nm

kth CWDM filter                    (k+1)th CWDM filter

| 6.5 nm | 6.5 nm | 7 nm | 6.5 nm | 6.5 nm |

maximum central
wavelength deviation

maximum central
wavelength deviation

EP 2 966 791 A1

FIG. 4

$\lambda_1 \cdots \lambda_{K-1}, \lambda_{K+1} \cdots \lambda_N$

$\lambda_1, \lambda_2 \cdots \lambda_N$ ⇨

⇨ $\lambda_1, \lambda_2 \cdots \lambda_N$

11

12

10

$\lambda_k$

$\lambda_k$

FIG. 5

$\lambda_{E1} \cdots \lambda_{Ek} \cdots \lambda_{EN}$

$\lambda_{E1} \cdots \lambda_{Ek} \cdots \lambda_{EN}$

$\lambda_{W1} \cdots \lambda_{Wk} \cdots \lambda_{WN}$

$\lambda_{W1} \cdots \lambda_{Wk} \cdots \lambda_{WN}$

51

52

53

54

50

$\lambda_{Ek}$

$\lambda_{Wk}$

$\lambda_{Wk}$

$\lambda_{Ek}$

FIG. 6

600

610          630          620

| LIGHT SOURCE | CONTROL UNIT | COOLING UNIT |

FIG. 7

TRx  TRx

701

OADM     710

702

TRx

TRx

OADM

740

704

OADM     730

OADM

720

703

TRx

TRx

TRx  TRx

11

# FIG. 8

kth Central wavelength     (k+1)th Central wavelength

Channel spacing : 20 nm

kth CWDM filter     (k+1)th CWDM filter

Example:
x = 4 nm,
y = 2.5 nm

y   y   y   y   7 nm   y   y   y   y

x   x   x   x

EP 2 966 791 A1

FIG. 9

$\lambda_{E1} \cdots \lambda_{Ek} \cdots \lambda_{EN}$

$\lambda_{W1} \cdots \lambda_{Wk} \cdots \lambda_{WN}$

$\lambda_1 \cdots \lambda_{K-1}, \lambda_{K+1} \cdots \lambda_N$

$\lambda_{E1} \cdots \lambda_{Ek} \cdots \lambda_{EN}$

$\lambda_{W1} \cdots \lambda_{Wk} \cdots \lambda_{WN}$

911    912    910

$\lambda_{Ek}$    $\lambda_{Wk}$        $\lambda_{Wk}$    $\lambda_{Ek}$

FIG. 10

FIG. 11

EP 2 966 791 A1

FIG. 12

FIG. 13

EP 2 966 791 A1

FIG. 14

# FIG. 15

EP 2 966 791 A1

FIG. 16

# FIG. 17

```
        ( START )
            │
            ▼
┌───────────────────────────┐
│   FORMING OPTICAL SIGNAL   │────── S1710
└───────────────────────────┘
            │
            ▼
┌───────────────────────────┐
│    ALLOCATING AT LEAST TWO │
│  CHANNELS PER WAVELENGTH GRID │──── S1720
└───────────────────────────┘
            │
            ▼
┌───────────────────────────┐
│ ADDING OR DROPPING OPTISIGNALS │── S1730
└───────────────────────────┘
            │
            ▼
        (  END  )
```

# EP 2 966 791 A1

## INTERNATIONAL SEARCH REPORT

International application No.

**PCT/KR2014/001885**

### A. CLASSIFICATION OF SUBJECT MATTER

***H04B 10/275(2013.01)i, H04J 14/02(2006.01)i***

According to International Patent Classification (IPC) or to both national classification and IPC

### B. FIELDS SEARCHED

Minimum documentation searched (classification system followed by classification symbols)
H04B 10/275; H04B 10/2581; H04J 14/02; H04B 10/02; H04B 10/00; H04B 10/18; H04B 10/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: bidirectional coarse wavelength division multiplexing ring network system, OADM: Optical Add-Drop Multiplexer, CWDM wavelength grid, wavelength channel, wavelength division multiplexer

### C. DOCUMENTS CONSIDERED TO BE RELEVANT

| Category* | Citation of document, with indication, where appropriate, of the relevant passages | Relevant to claim No. |
|---|---|---|
| Y | SAJJAD HUSSAIN et al., "CWDM and OEO Transport Architectures", In: Future Challenges and Opportunities for DWDM and CWDM in the Photonic Networks, Midlands Communication Group of the IEE, the University of Warkwick, Coventry, UK, 11 June 2004 (http://citeseerx.ist.psu.edu/viewdoc/download?doi=10.1.1.196.6562&rep=rep1&type=pdf) See page 4, line 22 - page 6, line 33; page 9, line 3 - page 12, line 7; and figures 1, 4-5, 8-9. | 1-17 |
| Y | US 7965949 B1 (WACH, Michael L.) 21 June 2011 See column 2, lines 41-49; column 13, line 46 - column 14, line 30; column 15, line 8 - column 16, line 50; column 58, lines 4-43; and figures 1A-1B, 3, 32. | 1-17 |
| A | JP 2010-004251 A (HITACHI COMMUNICATION TECHNOLOGIES LTD.) 07 January 2010 See paragraphs 3-25, 37-39; claims 1, 3-5; and figures 1-3. | 1-17 |
| A | KR 10-2012-0131429 A (E-PRIME CO., LTD.) 05 December 2012 See paragraphs 8-25, 31-69; claims 1-2, 4; and figures 1-3. | 1-17 |
| A | EP 1063803 A1 (LUCENT TECHNOLOGIES INC.) 27 December 2000 See paragraphs 5-9, 28-32; claims 12-13; and figure 6. | 1-17 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26 MAY 2014 (26.05.2014) | **26 MAY 2014 (26.05.2014)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2014/001885**

| Patent document cited in search report | Publication date | Patent family member | Publication date |
|---|---|---|---|
| US 7965949 B1 | 21/06/2011 | US 7565084 B1 | 21/07/2009 |
| | | US 8521038 B1 | 27/08/2013 |
| JP 2010-004251 A | 07/01/2010 | US 2009-0317078 A1 | 24/12/2009 |
| KR 10-2012-0131429 A | 05/12/2012 | KR 10-1245845 B1 | 21/03/2013 |
| EP 1063803 A1 | 27/12/2000 | AU 2000-39349 A1 | 21/12/2000 |
| | | CA 2310949 A1 | 15/12/2000 |
| | | JP 2001-036557 A | 09/02/2001 |
| | | KR 10-2001-0015011 A | 26/02/2001 |
| | | TW 496055 B | 21/07/2002 |

Form PCT/ISA/210 (patent family annex) (July 2009)